# EUROPEAN PATENT APPLICATION

(11) **EP 1 690 691 A1**
(43) Date of publication of application: **16.08.2006**
(21) Application number: 04799496.7
(22) Date of filing: 04.11.2004
(51) Int. Cl.: B41M 5/26, G11B 7/24, G11B 7/0045

(54) **OPTICAL RECORDING MEDIUM, PROCESS FOR PRODUCING THE SAME, SPUTTERING TARGET, METHOD OF USING OPTICAL RECORDING MEDIUM AND OPTICAL RECORDING APPARATUS**

(30) Priority: 05.11.2003 JP 2003375937
(71) Applicant: Ricoh Company, Ltd., Tokyo 143-8555 (JP)
(72) Inventor: KATO, Masaki, Sagamihara-shi, Kanagawa 2280811 (JP); ABE, Mikiko, Kawasaki-shi, Kanagawa 2100023 (JP); ITO, Kazunori, Yokohama-shi, Kanagawa 2240006 (JP); DEGUCHI, Hiroshi, Yokohama-shi, Kanagawa 2320026 (JP); OHKURA, Hiroko, Yokohama-shi, Kanagawa 2240034 (JP); SEKIGUCHI, Hiroyoshi, Yokohama-shi, Kanagawa 2240007 (JP)
(74) Representative: Barz, Peter
(86) International application number: PCT/JP2004/016335
(87) International publication number: WO 2005/044576

(57) **Abstract**

The present invention provides a high-quality optical recording medium enabling direct overwriting even at a scanning speed of 20 m/s or more, which is as fast as 6X DVD or more as well as minimizing degradation thereof with time and to provide a method for producing the optical recording medium, a sputtering target, a method for using the optical recording medium, and an optical recording apparatus. To achieve the object, the optical recording medium is provided with at least a first protective layer, a recording layer, a second protective layer, and a reflective layer in this order or in reverse order, where the recording layer contains a composition expressed by the formula, (Ga_{α}Sb_{1-α})_{1-β-γ}Sn_{β}Zn_{γ}
(where α, β, and γ respectively represent an atomic ratio of their respective elements and are expressed as 0.12 ≤ α ≤ 0.20, 0.10 ≤ β ≤ 0.25, and 0.02 ≤ γ ≤ 0.10).

## Description

### Technical Field

The present invention relates to an optical recording medium (hereinafter, may be referred to as "phase-change optical information recording medium", "phase-change optical recording medium", "optical information recording medium" or "information recording medium") capable of at least one of a recording operation, a reproducing operation, an erasing operation, and a rewriting operation of information by applying a laser beam onto the optical recording medium to induce optical changes in the material constituting the recording layer. The present invention also relates to a method for producing the optical recording medium; a sputtering target; a method for using the optical recording medium, and an optical recording apparatus for the optical recording medium.

### Background Art

Rewritable optical recording media are widely prevalent as recording media for digital information. Among the rewritable optical recording media, optical recording media using phase-change materials for recording layers are most commonly used, because they utilize reversible phase-changes of those phase-change materials as a recording principle and are capable of recording information as well as capable of rewriting of information.

Recently, with the digitization of analogue information, the volume of digital information to be processed significantly grows larger, and thus speeding-up of information processing is increasingly required. For a means to achieve speeding-up of information processing, there are two means i.e. high-densification of information and speeding-up of recording and reproducing speeds. The high-densification of information can be responded to by making recorded marks smaller in size, making recording pitches narrower, or the like. Therefore, it requires changes in optical systems (for example, wavelength, numerical aperture (NA) of an object lens, and limb intensity) used for recording and reproducing information, and thus it becomes difficult to ensure the compatibility with conventional recording and reproducing apparatuses.

In contrast, the speeding-up of recording and reproducing speeds is regarded as an effective means, because the speeding-up of recording and reproducing speeds allows the use of optical systems substantially similar to conventionally used ones, and can be achieved with ease by increasing the scanning speed of an optical pickup (by increasing the rotation speed when a disc-shaped optical recording medium is used).

However, for phase-change optical recording media, the speeding up of recording speed is thought to be difficult, because the recording principle utilizes a dynamical process of phase changes between a crystalline phase and an amorphous phase induced by quenching and slowly cooling the recording layer. When the scanning speed is increased, the energy per unit time applied to a phase-change optical recording medium is reduced, and thus a higher-power laser beam needs to be applied to the phase-change optical recording medium for recording, however, when a high-power laser is applied to a phase-change recording medium and is scanned at high-speed, the recording layer is in a quenched condition, resulting in an amorphous condition. Accordingly, with a certain upper limit crystallization (scanning) rate or more, it is impossible to crystallize a recording layer, or the recording layer is incompletely crystallized, and thus it makes impossible to erase recorded marks and also impossible to rewrite information. For this reason, with respect to phase-change recording media, it is necessary to control the upper limit crystallization rate of the material used for the recording layer along with the scanning speed at the time of recording, rewriting, or erasing of information.

Conventionally, as a recording layer material of phase-change optical recording media, chalcogen containing Te is typically used. In particular, when an alloy containing Sb and Te is used, the erasing property of recorded marks is improved. Therefore, such a material is used as a recording layer material suitable for high-speed recording. For example, an alloy having a eutectic composition of Sb₇₀Te₃₀ alloy or a compound having a SbTe alloy which is in close proximity to the eutectic composition as the main composition with a trace amount of additional elements added thereto has been put into practical use in CD-RW, DVD-RW, DVD+RW, and the like. Examples of the SbTe alloy include AgInSbTe, GeInSbTe, AgGeInSbTe, GeGaSbTe. In these alloyes, Sb and Te constitute 85 atomic % or more of all the atomic mass, the basic physical properties of a phase-change optical recording medium are determined by the composition ratio of Sb and Te, and the thermal property and optical properties thereof are finely controlled by using additives.

The SbTe alloy allows higher-speed rewriting (overwriting) by increasing the amount of Sb to reduce the crystallization temperature. At the same time, an increase in Sb amount in a SbTe alloy causes a problem that the storage reliability (for example, the storage reliability under the circumstance of 80°C) of recorded information degrades due to significantly reduced stability of amorphous marks.

To solve the problem, various chalcogen-free recording layer materials are proposed. For example, Patent Literature 1 proposes a GaSb alloy. However, when the GaSb alloy is used, the storage reliability of the optical recording medium degrades. In addition, when Sn is added to the GaSb alloy, it causes a problem that the optical recording medium is degraded with the lapse of time. Patent Literature 1 describes that it is possible to add any one of elements selected from Ag, Cu, Ge, Sn, Zn, In, Se, N, Ni, Ti, V, Cr, Mn, and Co in an amount of 15 atomic% or less as an additional element to the GaSbB alloy disclosed in the publication. However, the publication does not disclose nor suggest specific effectiveness of the GaSbB alloy when Zn and Sn is added thereto.

Patent Literature 2 proposes an optical recording medium in which GaSb is used as the main component, and any one of elements selected from Al, Si, P, S, Zn, Ge, As, Se, In, Sn, Te, and Bi is added in an amount of around 20 atomic%. However, the proposal is intended for write-once optical recording media (recordable optical recording media incapable of erasing), and the proposal is to be used on target conditions with a channel bit of around 2Mbps and a scanning speed of 4m/s or less and is not intended for rewritable optical recording media.

The optical recording medium disclosed in Patent Literature 3 limits its crystalline structure of the recording layer to chalcopyrite, and the composition of the recording layer is limited to the general formula, X-Y-Z₂ (X is at least one element selected from Ag, Zn, and Cd; Y is at least one element selected from Al, Ga, In, Si, and Sn; and Z is at least one element selected from Sb, Bi, P, and Te. However, the composition does not contain AgInTe₂, AgGaTe₂, and AgAlTe₂).

In addition, Non Patent Literature 1 discloses an optical recording medium using a recording layer material of a GaSb eutectic composition, however, the publication does not disclose nor suggest the point of adding Sn and Zn at the same time.

Accordingly, an optical recording medium which is capable of directly overwriting information even at a scanning speed of 20 m/s or more which is as fast as 6X DVD, and minimizing the degradation thereof with time has not yet been obtained, and the current situation demands immediate provision of such an optical recording medium.
Patent Literature 1 Japanese Patent Application Laid Open (JP-A) No. 2003-231354
Patent Literature 2 Japanese Patent (JP-B) No. 1690817
Patent Literature 3 Japanese Patent (JP-B) No. 2941848
Non Patent Literature 1 Bulletin of The 14^{th} Symposium on Phase Change Optical Recording, on page 11 of "Characterization of GaSb Phase-Change Material of High-Speed ReWritable Media"

### Disclosure of the Invention

It is therefore an object of the present invention to provide a high-quality optical recording medium that can solve the conventional problems and respond to the demands and is capable of direct overwriting even at a scanning speed of 20 m/s or more, which is as fast as 6X DVD or more, and is capable of minimizing the degradation thereof with time. The present invention also provides a method for producing the optical recording medium, a sputtering target, a method for using the optical recording medium, and an optical recording apparatus for the optical recording medium.

As a result of keen examinations provided by the inventors of the present invention to solve the above-mentioned problems and to find a GaSb alloy having excellent properties for achieving practical application of an optical recording medium capable of high-speed recording, it is found that it is possible to provide a high-quality optical recording medium enabling direct overwriting even at a scanning speed of 20 m/s or more, which is as fast as 6X DVD or more, and is capable of minimizing the degradation thereof with time by containing a composition expressed by the formula of (Ga_{α}Sb_{1-α})_{1-β-γ}Sn_{β}Zn_{γ} (where α, β, and γ respectively represent an atomic ratio of their respective elements and are expressed as 0.12 ≤ α ≤ 0.20, 0.10 ≤ β ≤ 0.25, and 0.02 ≤ γ ≤ 0.10) in a recording layer material.

The present invention is based on the findings by the inventors of the present invention, and how to solve the aforesaid problems are as follows.
< 1 > An optical recording medium provided with a substrate, a first protective layer, a recording layer, a second protective layer, and a reflective layer,
   the first protective layer, recording layer, second protective layer and reflective layer being disposed on the substrate in this order or in reverse order, wherein the recording layer contains a composition expressed by the following Formula 1:

   (Ga_{α}Sb_{1-α}) _{1-β-γ}Sn_{β}Zn_{γ} Formula 1

   where α, β, and γ respectively represent an atomic ratio of their respective elements and are expressed as 0.12 ≤ α ≤ 0.20, 0.10 ≤ β ≤ 0.25, and 0.02 ≤ γ ≤ 0.10.
   The optical recording medium of the present invention excels in storage stability and enables repeated recording with the same memory capacity of DVD-ROM at a recording linear velocity as fast as 6X DVD (around 20 m/s) or more, because the recording layer contains the above-mentioned composition.
< 2 > The optical recording medium according to the item <1>, wherein the recording layer contains a composition expressed by the following Formula 1-1:

   (Ga_{α}Sb_{1-α}) _{1-β-γ}Sn_{β}Zn_{γ} Formula 1-1

   where α, β, and γ respectively represent an atomic ratio of their respective elements and are expressed as 0.13 ≤ α ≤ 0.17, 0.12 ≤ β ≤ 0.23, and 0.03 ≤ γ ≤ 0.07.
< 3 > The optical recording medium according to any one of the items < 1 > to < 2 >, wherein β and γ satisfy the following formula:

   0.13 ≤ β/γ ≤ 5.0.
< 4 > The optical recording medium according to the item < 3 >, wherein β and γ satisfy the following formula:

   2.0 ≤ β/γ ≤ 5.0.
< 5 > The optical recording medium according to any one of the items < 1 > to < 4 >, wherein the recording layer performs at least one of a recording operation, a reproducing operation, an erasing operation and a rewriting operation of information by utilizing reversible phase-changes between amorphous and crystalline phases.
< 6 > The optical recording medium according to any one of the items < 1 > to < 5 >, wherein the recording layer has a thickness of 10nm to 20nm.
< 7 > The optical recording medium according to any one of the items < 1 > to < 6 >, wherein the first protective layer and the second protective layer respectively contain a mixture of ZnS and SiO₂. In the optical recording medium according to the item < 7 >, the first protective layer and the second protective layer respectively contain ZnS and SiO₂. The mixture of ZnS and SiO₂ has advantages that the mixture is excellent in heat resistance, low-heat thermal conductivity, and chemical stability, has a small residual stress, and hardly cause degradation of properties such as recording sensitivity and erasing ratio even when repeatedly performing recording/erasing operations, and is excellent in adhesiveness to the a recording layer.
< 8 > The optical recording medium according to any one of the items < 1 > to < 7 >, wherein the reflective layer contains any one of Ag and an Ag alloy. In the optical recording medium according to the item < 8 >, pure Ag or an Ag alloy has an extremely high thermal conductivity and can form a quenched structure suitable for formation of amorphous marks immediately after the recording layer reaches a high temperature during recording, and with the use of pure Ag or an Ag alloy, it is possible to form an excellent reflective layer.
< 9 > The optical recording medium according to any one of the items < 1 > to < 8 >, further provided with a sulfur-free third protective layer between the second protective layer and the reflective layer,
   wherein the sulfur-free third protective layer contains any one of SiC and Si. Particularly when a reflective layer contains Ag, as described in the optical recording medium according to the item < 9 >, and when a material containing sulfur like a mixture of ZnS and SiO₂ is used for the second protective layer, sulfur reacts to Ag to decay the reflective layer. Therefore, by providing a third protective layer between the second protective layer and the reflective layer in the optical recording medium, it is possible to prevent sulfuration of Ag and to ensure the reliability of the optical recording medium.
<10> The optical recording medium according to any one of the items < 1 > to < 9 >, further provided with an interface layer at least between the recording layer and the first protective layer or between the recording layer and the second protective layer.
<11> The optical recording medium according to any one of the items < 1 > to <10> enabling repeated recording at a linear velocity of 20 m/s or more.
<12> A sputtering target used for the production of a recording layer, the sputtering target contains a composition expressed by the following Formula 1:

   (Ga_{α}Sb_{1-α}) _{1-β-γ}Sn_{β}Zn_{γ} Formula 1

   where α, β, and γ respectively represent an atomic ratio of their respective elements and are expressed as 0.12 ≤ α ≤ 0.20, 0.10 ≤ β ≤ 0.25, and 0.02 ≤ γ ≤ 0.10.
<13> The sputtering target according to the item <12>, containing a composition expressed by the following Formula 1-1:

   (Ga_{α}Sb_{1-α}) _{1-β-γ}Sn_{β}Zn_{γ} Formula 1-1

   where α, β, and γ respectively represent an atomic ratio of their respective elements and are expressed as 0.13 ≤ α ≤ 0.17, 0.12 ≤ β ≤ 0.23, and 0.03 ≤ γ ≤ 0.07.
<14> The sputtering target according to any one of the items <12> to <13>, wherein β and γ satisfy the formula of 0.13 ≤ β/γ ≤ 5.0.
<15> The sputtering target according to the item <14>, wherein β and γ satisfy the formula of 2.0 ≤ β/γ ≤ 5.0.
   For the sputtering target according to any one of the items <12> to <15>, by forming the recording layer by a sputtering method using an alloy target having a specific composition, it is possible to obtain a desired composition of the recording layer as well as to provide an optical recording medium optimized for a recording speed as fast as 6X DVD (around 20 m/s) or more with stability.
<16> A method for producing an optical recording medium which includes forming a recording layer by a sputtering method using a sputtering target according to any one of the items <12> to <15> to thereby produce an optical recording medium which is provided with a substrate, a first protective layer, the recording layer, and a reflective layer,
   the first protective layer, recording layer, second protective layer and reflective layer being disposed on the substrate in this order or in reverse order.
   In the method for producing an optical recording medium of the present invention, a recording layer is formed by a sputtering method using the sputtering target of the present invention. As a result, it is possible to efficiently produce an optical recording medium optimized for a recording speed as fast as 6X DVD (around 20 m/s) or more.
<17> A method for using an optical recording medium which includes applying a laser beam onto an optical recording medium from the first protective layer side to thereby perform at least one of a recording operation, a reproducing operation, an erasing operation, and a rewriting operation of information,
   wherein the optical recording medium is an optical recording medium according to any one of the items < 1 > to <11>.
   In the method for using an optical recording medium of the present invention, a laser beam is applied onto an optical recording medium of the present invention to thereby efficiently perform any one of a recording operation, a reproducing operation, an erasing operation, and a rewriting operation.
<18> An optical recording apparatus for applying a laser beam onto an optical recording medium from a laser source to thereby perform at least one of a recording operation, a reproducing operation, an erasing operation, and a rewriting operation on the optical recording medium,
   wherein the optical recording medium is an optical recording medium according to any one of the items < 1 > to <11>.

In the optical recording apparatus of the present invention, a laser beam is applied to an optical recording medium from a light source to thereby perform any one of a recording operation, a reproducing operation, an erasing operation, and a rewriting operation, and for the phase-change optical recording medium, the optical recording medium of the present invention is used. The optical recording apparatus of the present invention enables any one of a recording operation, a reproducing operation, an erasing operation, and a rewriting operation of information stably and assuredly.

### Brief Description of Drawings

FIG. 1 is a schematic cross-sectional view showing one example of the optical recording medium of the present invention.
FIG. 2 is a schematic cross-sectional view showing another example of the optical recording medium of the present invention.
FIG. 3 is a schematic cross-sectional view showing yet another example of the optical recording medium of the present invention.
FIG. 4 is a schematic cross-sectional view showing still yet another example of the optical recording medium of the present invention.

### Best Mode for Carrying Out the Invention

### (Optical Recording Medium)

The optical recording medium of the present invention is provided with a substrate, and at least a first protective layer, a recording layer, a second protective layer, and a reflective layer on the substrate in this order or in reverse order, and is further provided with other layers in accordance with the necessity.

The optical recording medium is irradiated with a laser beam from the first protective layer side to thereby perform at least one of a recording operation, a reproducing operation, and a rewriting operation of information.

### - Recording Layer -

A laser beam is applied onto the recording layer to induce phase changes between crystal phase and amorphous phases to thereby record and erase signals. In this case, the reflectance of crystalline phase differs from that of amorphous phase. Typically, a crystalline phase having a high-reflectance is in an unrecorded condition, and by applying a high-power laser pulse to the crystalline phase to heat the recording layer and by quenching the recording layer, an amorphous mark having a low-reflectance is recorded as a signal.

The recording layer contains, as described above, a GaSbSnZn alloy.

The recording layer contains a Ga-Sb alloy as the base material, and the composition ratio is close to a eutectic composition of Ga_{0.12}Sb_{0.88}. By using such a composition which is close to a eutectic composition, it is possible to keep the melting point of the recording layer material low.

In addition, by increasing the Sb ratio, the crystallization temperature can be lowered, the recording layer can be crystallized with a lower quantity of energy, and it is possible to respond to high-speed recording. However, when Sb is added in large quantity, excessive amounts of Sb segregation occur, causing a significant degradation of uniformity of the recording layer. In other words, the degradation of uniformity of reflectance which is considered caused by the Sb segregation induces noise of reproduced signals (RF noise), resulting in a significant degradation in quality of reproduced signals.

In contrast, when the Sb ratio is kept low (the Ga ratio is increased), the crystallization temperature is increased, and the crystallization needs more energy. Therefore, it is difficult to crystallize a recording layer at high-speed. On the other hand, since occurrences of Sb segregation can be suppressed, the uniformity of crystalline condition is improved, and it is possible to minimize the aforesaid RF noise as well as to raise the reliability of reproduced signals.

Thus, with a binary alloy of GaSb, it is difficult to achieve both of the crystallization of a recording layer at high-speed (i.e. repeated recording properties with high speed recording) and low-noise performance of reproduced signals (i.e. prevention of Sb segregation).

Then, the inventors studied an additional element in order to achieve both the high-speed recording and the low-noise performance. As a result, the study showed that an addition of Sn to a GaSb alloy which is close to a eutectic composition is effective in the high-speed crystallization and the low-noise performance. Namely, by reducing the Sb amount from the eutectic composition, occurrences of Sb segregation can be prevented, by adding Sn, the crystallization temperature can be reduced, and by increasing the crystallization rate, the crystallization of a recording layer is enabled at high-speed (high-scanning speed) to thereby improve the repeated recording properties.

However, the study also shows that the addition of Sn induces alleviation of optical properties of the recording layer material, and the alleviation largely varies reflectance of the optical recording medium. The mechanism has not been clarified yet, however, the reflectance of crystallized portions is virtually lowered with the lapse of time by adding Sn, resulting in degraded reliability and stability of the optical recording media. In addition, since a reduced reflectance causes changes in optimum values of recording conditions typified by recording sensitivity (for example, the optimum recording power) and strategy of an optical recording medium, it drastically degrades the shelf properties of the optical recording medium.

Then, in order to prevent changes in reflectance, as a result of study on a fourth element, it is found that it is possible to prevent changes in reflectance by adding Zn. Thus, a recording layer of the optical recording medium of the present invention contains a GaSbSnZn alloy, and the appropriate composition range of these elements of Ga, Sb, Sn, and Zn is expressed by the following Formula 1.

(Ga_{α}S_{1-α})_{1-β-γ}Sn_{β}Zn_{γ} Formula 1

In Formula 1, α, β, and γ respectively represent an atomic ratio of their respective elements and are expressed as 0.12 ≤ α ≤ 0.20, 0.10 ≤ β ≤ 0.25, and 0.02 ≤ γ ≤ 0.10. In this case, the recording layer preferably contains a composition expressed by the following Formula 1-1.

(Ga_{α}Sb_{1-α}) _{1-β-γ}Sn_{β}Zn_{γ} Formula 1-1

In Formula 1-1, α, β, and γ respectively represent an atomic ratio of their respective elements and are expressed as 0.13 ≤ α ≤ 0.17, 0.12 ≤ β ≤ 0.23, and 0.03 ≤ γ ≤ 0.07.

When α is lower than 0.12, Sb segregation occurs, and the uniformity of reflectance of the recording layer in a crystalline condition degrades, and therefore the noise components of reproduced signals of the optical recording medium is increased, and a degraded CN ratio and a raise of the jitter value may cause significant degradation of quality of reproduced signals. When α is higher than 0.20, the crystallization rate is significantly lowered, and thus it may be difficult to record and rewrite information at a scanning speed of 20 m/s or more, which is a target speed of the present invention.

When β is lower than 0.10, the crystallization temperature and the crystallization rate are significantly lowered, and thus it may be difficult to record and rewrite information at a scanning speed of 20 m/s or more, which is a target speed of the present invention. When β is higher than 0.25, the crystallization rate is increased, and amorphous marks immediately after being recorded are re-crystallized, and there may be cases where the reflectance contrast cannot be ensured with sufficiency.

When γ is lower than 0.02, an effect of the addition of Zn may not be exhibited, and when γ is higher than 0.10, it may be difficult to repeatedly recording information at a scanning speed of 20 m/s or more because of the significantly decreased crystallization rate.

Further, for the recording layer, it is preferable that β and γ satisfy the expression of 0.13 ≤ β/γ ≤ 5.0, and it is more preferable that β and γ satisfy the expression of 2.0 ≤ β/γ ≤ 5.0. This is because an addition of Sn has a contradictory effect from that of an addition of Zn.

In the optical recording medium of the present invention, an alloy having the specific composition is used as the main component. Here, the main component means that the specific composition is contained in such an amount that it can make use of the properties of the alloy, and the alloy is to be used alone except when it is particularly needed to add an additive.

For a method for forming the recording layer, for example, various vapor deposition methods such as vacuum evaporation method, sputtering method, plasma CVD method, optical CVD method, ion-plating method, and electron-beam deposition method are used. Of these methods, sputtering method is excellent in mass productivity, quality of layer, and the like.

The thickness of the recording layer is not particularly limited, may be suitably selected in accordance with the intended use, and is preferably 10 nm to 20 nm. When the thickness of the recording layer is less than 10 nm, it is possible to increase the sensitivity of the optical recording medium, because the heat capacity of the recording layer can be reduced, however, it is difficult to obtain a sufficient reflectance contrast due to the shortened optical distance (the distance a reproduced beam is passing), and it may cause degradation of reproducing reliability. When the thickness of the recording layer is more than 20 nm, the reflectance contrast can be kept high, however, the sensitivity may be degraded because of the increased volume of the recording layer.

Next, examples of the layer structure of the optical recording medium of the present invention will be explained with reference to figures.

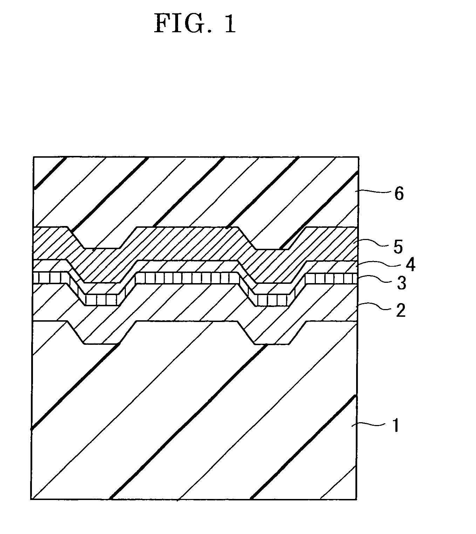

FIG. 1 is a schematic cross-sectional view showing one example of the optical recording medium of the present invention, and the optical recording medium is provided with a substrate 1, a first protective layer 2, a recording layer 3, a second protective layer 4, a reflective layer 5, and a resin protective layer 6 disposed on the substrate 1 in a laminar structure in this order.

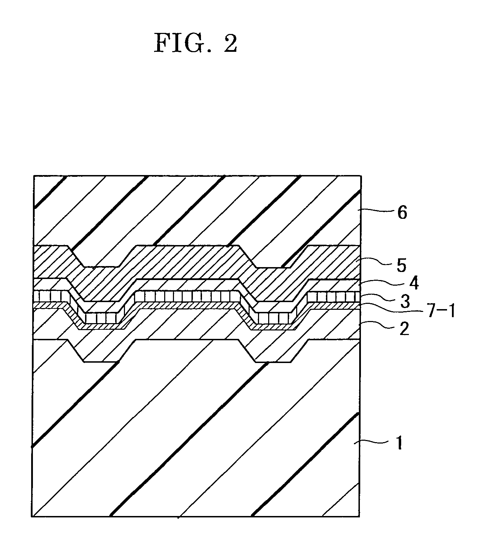

FIG. 2 is a schematic cross-sectional view showing another example of the optical recording medium of the present invention, and the optical recording medium is provided with a substrate 1, a first protective layer 2, an interface layer 7-1, a recording layer 3, a second protective layer 4, a reflective layer 5, and a resin protective layer 6 disposed on the substrate 1 in a laminar structure in this order.

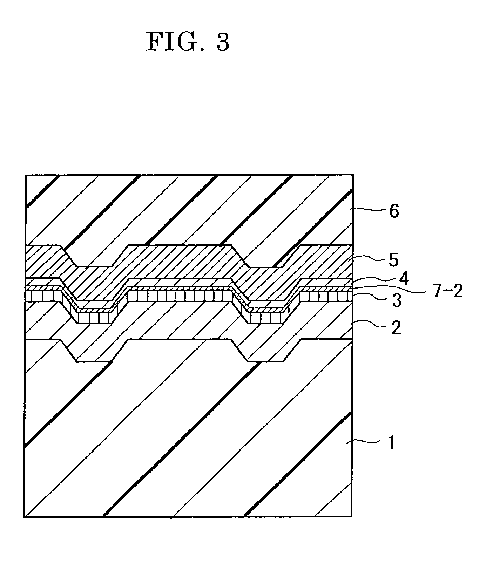

FIG. 3 is a schematic cross-sectional view showing yet another example of the optical recording medium of the present invention, and the optical recording medium is provided with a substrate 1, a first protective layer 2, a recording layer 3, an interface layer 7-2, a second protective layer 4, a reflective layer 5, and a resin protective layer 6 disposed on the substrate 1 in a laminar structure in this order.

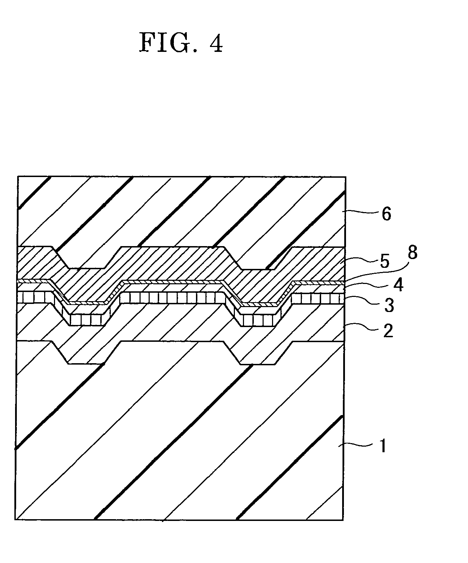

FIG. 4 is a schematic cross-sectional view showing still yet another example of the optical recording medium of the present invention, and the optical recording medium is provided with a substrate 1, a first protective layer 2, a recording layer 3, a second protective layer 4, and a third protective layer 8, a reflective layer 5, and a resin protective layer 6 disposed on the substrate 1 in a laminar structure in this order.

It should be noted that another substrate may be bonded to the surface of the resin protective layer 6 in order for further reinforcement or protection of the optical recording medium in accordance with the necessity.

### - Substrate -

For the substrate 1, it is necessary to select a material with which the mechanical strength of the optical recording medium can be ensured. When a light used for recording and reproducing is incident through the substrate, the substrate needs to be sufficiently transparent in the wavelength region of the light.

Typically, for the material of the substrate, glass, ceramics, resins and the like are used, however, a substrate made of a resin is preferable in terms of formability, and cost. Examples of the resin include polycarbonate resins, acrylic resins, epoxy resins, polystyrene resins, acrylonitrile-styrene copolymers, polyethylene resins, polypropylene resins, silicone resins, fluorine resins, ABS resins, and urethane resins. Of these resins, polycarbonate resins and acrylic resins are particularly preferable in terms of formability, optical properties, and cost.

The thickness of the substrate 1 is not particularly limited and is typically determined by the focusing property of a laser and a pickup lens to be used. A substrate having a thickness of 1.2 mm is typically used for CD systems for a wavelength of 780 nm, and a substrate having a thickness of 0.6 mm is typically used for DVD systems for a wavelength of 650 nm to 665 nm.

For the substrate, for example, it is preferable to use a polycarbonate resin substrate having a tracking guide groove on a surface thereof, and the substrate having a diameter of 12 cm, a thickness of 0.6 mm formed in a disc shape, and is excellent in workability and optical properties. It is preferable that the tracking guide groove be a wobble groove of 0.74 µm ± 0.03 µm in track pitch, 22 nm to 40 nm in groove depth, and 0.2 µm to 0.4µm in groove width. Particularly, by deepening the groove depth, the modulation degree of the optical recording medium can be taken wide because of reduced reflectance of the optical recording medium.

An adhesive layer used for bonding the substrate 1 in which information signals will be written to a bonding substrate is formed by using a two-sided adhesive sheet of which an adhesive is applied on both sides of a base film, a thermosetting resin, or an ultraviolet curable resin. The thickness of the adhesive layer is typically around 50 µm.

When a self-adhesive sheet or a thermosetting resin is used as an adhesive layer, the bonding substrate (dummy substrate) is not necessarily transparent, however, when an ultraviolet curable resin is used for the adhesive layer, it is preferable to use a transparent substrate which is transmissive to ultraviolet rays. Typically, the thickness of the bonding substrate is preferably 0.6 mm, which is the same as that of the transparent substrate 1 in which information signals will be written.

### - First Protective Layer -

It is preferable that the first protective layer 2 is excellent in adhesiveness to the substrate and the recording layer and has high heat resistance, and it is further preferable that the first protective layer 2 has optical properties suitable for repeated recording at high linear velocity, because the first protective layer 2 assumes a role as an optical interference layer which enables effective light absorption into the recording layer.

Examples of materials of the first protective layer include metal oxides such as SiO, SiO₂, ZnO, SnO₂, Al₂O₃, TiO₂, In₂O₃, MgO, and ZrO₂; nitrides such as Si₃N₄, AlN, TiN, BN, and ZrN; sulfides such as ZnS, In₂S₃, and TaS₄; carbides such as SiC, TaC, B₄C, WC, TiC, and ZrC; diamond-like carbons; or mixtures thereof. Of these materials, mixtures of ZnS and SiO₂ are preferable. The mixture mole ratio of ZnS and SiO₂ (ZnS:SiO₂) is preferably 50 to 90 : 50 to 10, and more preferably 60 to 90 : 40 to 10.

Examples of the method for forming the first protective layer 2 include various vapor deposition methods such as vacuum evaporation method, sputtering method, plasma CVD method, optical CVD method, ion-plating method, and electron-beam deposition method. Of these methods, sputtering method is excellent in mass productivity, quality of layer, and the like.

The thickness of the first protective layer is not particularly limited, may be suitably selected in accordance with the intended use, and is preferably 40 nm to 500 nm, and more preferably 60 nm to 200 nm. When the thickness of the first protective layer is less than 40 nm, and when the recording layer is heated, the substrate may be deformed, because the substrate is also heated at the same time. When the thickness is more than 500 nm, the first protective layer may be exfoliated from the substrate with ease at the surface of the interface thereof.

### - Second Protective Layer -

It is preferable that the second protective layer 4 is excellent in adhesiveness to the recording layer and the reflective layer and has high heat resistance, and it is further preferable that the second protective layer 4 has optical properties suitable for repeated recording at high linear velocity, because the second protective layer 4 assumes a role as an optical interference layer which enables effective light absorption into the recording layer.

Examples of materials of the second protective layer include metal oxides such as SiO, SiO₂, ZnO, SnO₂, Al₂O₃, TiO₂, In₂O₃, MgO, and ZrO₂; nitrides such as Si₃N₄, AlN, TiN, BN, and ZrN; sulfides such as ZnS, In₂S₃, and TaS₄; carbides such as SiC, TaC, B₄C, WC, TiC, and ZrC; diamond-like carbons; or mixtures thereof. Of these materials, mixtures of ZnS and SiO₂ are preferable. The mixture mole ratio of ZnS and SiO₂ (ZnS:SiO₂) is preferably 50 to 90 : 50 to 10, and more preferably 60 to 90 : 40 to 10.

Examples of the method for forming the second protective layer 4 include various vapor deposition methods such as vacuum evaporation method, sputtering method, plasma CVD method, optical CVD method, ion-plating method, and electron-beam deposition method. Of these methods, sputtering method is excellent in mass productivity, quality of layer, and the like.

The thickness of the second protective layer is not particularly limited, may be suitably selected in accordance with the intended use, and is preferably 5 nm to 100 nm, and more preferably 5 nm to 20 nm. When the thickness of the second protective layer is more than 100 nm, it may be difficult to form an amorphous phase because of excessively accumulated heat. When the thickness is less than 5 nm, the recording sensitivity may degrade.

### - Reflective Layer -

The reflective layer 5 assumes a role as a light-reflective layer, and meanwhile it also assumes a role as a heat dissipation layer which allows heat applied to the recording layer by application of a laser beam at the time of recording to escape. Since the formation of amorphous marks largely depends on the cooling rate by heat dissipation, it is important to select the material of a reflective layer of a phase-change optical recording medium optimized for high-linear velocity.

For materials of the reflective layer 5, it is possible to use metallic materials such as Al, Au, Ag, Cu, and Ta or alloys thereof. For elements to be added to these metallic materials, it is possible to use Cr, Ti, Si, Cu, Ag, Pd, and Ta. Of these, it is preferred that any one of Ag and an Ag alloy be contained. The reason is that a metal having a high-thermal conductivity and a high-reflectance is typically desirable for the material of a reflective layer constituting the optical recording medium from the perspective of thermal conductivity for controlling the cooling rate of heat generated at the time of recording, and from the perspective of optical properties for improving the contrast of reproduced signals by utilizing interference effects; and pure Ag or an Ag alloy respectively have an extremely high thermal conductivity of 427W/m·K and can form a quenched structure suitable for forming amorphous marks immediately after the recording layer is heated at a high-temperature at the time of recording.

In consideration of a high-thermal conductivity of the reflective layer as described above, pure silver is the most preferable material, however, in view of the corrosion resistance, Cu may be added to pure silver. In this case, in order not to impair properties of Ag, the amount of copper to be added to pure silver is preferably 0.1 atomic% to 10 atomic%, and particularly preferably 0.5 atomic% to 3 atomic%. An excessive addition of copper may degrade the high-thermal conductivity of Ag.

The reflective layer 5 can be formed by various vapor deposition methods, for example, vacuum evaporation method, sputtering method, plasma CVD method, optical CVD method, ion-plating method, and electron-beam deposition method. Of these methods, sputtering method is excellent in mass productivity, quality of layer, and the like.

The thickness of the reflective layer is not particularly limited, may be suitably selected in accordance with the intended use, and is preferably 60 nm to 300 nm, and more preferably 120 nm to 250 nm. When the thickness of the reflective layer is less than 60 nm, the heat dissipation effect cannot be obtained, and it may be difficult to form amorphous marks with ease. When the thickness is more than 300 nm, the reflective layer may be easily exfoliated at the surface of the interface.

### - Third Protective Layer 8 -

As shown in FIG. 4, it is preferred that a third protective layer 8 be formed between the second protective layer 4 and the reflective layer 5.

Examples of materials of the third protective layer 8 include Si, SiC, SiN, SiO₂ TiC, TiO₂, TiC-TiO₂, NbC, NbO₂, NbV-NbO₂, Ta₂O₅, Al₂O₃, ITO, GeN, and ZrO₂. Of these materials, TiC-TiO₂, Si, or SiC is particularly preferable in terms of high-barrier properties.

When pure Ag or an Ag alloy is used for the reflective layer, and when a protective layer containing sulfur like a mixture of ZnS and SiO₂ is used, sulfur diffuses to Ag, and this may cause a trouble of a disc defect (Ag reactions to sulfur). Thus, it is desirable to select an appropriate material for the third protective layer preventing the reactions from the perspective of (1) having barrier properties for preventing Ag reactions to sulfur; (2) being optically transparent to laser beams; (3) having a low-thermal conductivity for the purpose of formation of amorphous marks; (4) having excellent adhesiveness to the protective layer and the reflective layer; and (5) easy forming of reflective layer. Materials containing TiC-TiO₂, Si, or SiC as the main component satisfying the above-mentioned requirements are preferable as the constituent material of the third protective layer.

For the method for forming the third protective layer, it is possible to use various vapor deposition methods such as vacuum evaporation method, sputtering method, plasma CVD method, optical CVD method, ion-plating method, and electron-beam deposition method. Of these methods, sputtering method is excellent in mass productivity, quality of layer, and the like.

The thickness of the third protective layer is preferably 2nm to 20 nm, and more preferably 2 nm to 10 nm. When the thickness of the third protective layer is less than 2 nm, the layer may not function as a barrier layer. When the thickness is more than 20 nm, it possibly causes degradation of the modulation degree.

### - Interface Layer -

As shown in FIGS. 2 and 3, it is preferred that an interface layer 7-1 or an interface layer 7-2 be formed at least between the first protective layer 2 and the recording layer 3 or between the recording layer and the second protective layer. The material of the interface layer is preferably at least one selected from the group consisting of ZrO₂, TiO₂, SiO₂, Al₂O₃, Ta₂O₅, Y₂O₃, MgO, CaO, Nb₂O₅, and rare earth oxides. Of these materials, SiO₂ is particularly preferable.

The thickness of the interface layer is preferably 2 nm to 10 nm. With the thickness, it is possible to reduce the damage the substrate suffers when information is recorded at a high-power, and thus the repeated recording property is excellent when recording is performed with a high-power, and it is possible to take a wider recording power margin. When the thickness of the interface layer is less than 2 nm, it may be difficult to form a uniform layer, and when the thickness is more than 10 nm, the interface layer may be easily exfoliated.

On the reflective layer 5, a resin protective layer 6 may be further formed in accordance with the necessity. The resin protective layer has the effect of protecting the recording layer in the course of production process and upon completion of the production of the optical recording medium, and is typically formed using an ultraviolet curable resin. The thickness of the resin protective layer is preferably 2 µm to 5 µm.

Hereinbefore, the optical recording medium of the present invention will be explained in detail, however, the present invention is not limited to the embodiments described above and may be changed variously without departing from the scope of the invention. For example, the present invention is applicable to an optical recording medium of which two discs of same or different optical recording media are bonded to each other through a resin protective layer as substitute for a bonding substrate as can be seen in DVD systems.

### (Sputtering Target)

A sputtering target of the present invention is used in production of a recording layer and contains a composition expressed by the following Formula 1.

(Ga_{α}Sb_{1-α}) _{1-β-γ}Sn_{β}Zn_{γ} Formula 1

In Formula 1, α, β, and γ respectively represent an atomic ratio of their respective elements and are expressed as 0.12 ≤ α ≤ 0.20, 0.10 ≤ β ≤ 0.25, and 0.02 ≤ γ ≤ 0.10.

In this case, the sputtering target preferably contains a composition expressed by the following Formula 1-1.

(Ga_{α}Sb_{1-α})_{1-β-γ}Sn_{β}Zn_{γ} Formula 1-1

In Formula 1-1, α, β, and γ respectively represent an atomic ratio of their respective elements and are expressed as 0.13 ≤ α ≤ 0.17, 0.12 ≤ β ≤ 0.23, and 0.03 ≤ γ ≤ 0.07.

For the sputtering target, it is preferable that β and γ satisfy the expression of 0.13 ≤ β/γ ≤ 5.0, and it is more preferable that β and γ satisfy the expression of 2.0 ≤ β/γ ≤ 5.0.

The method for producing the sputtering target is not particularly limited, and may be suitably selected in accordance with the intended use. A given amount of the material for the sputtering target is preliminarily weighed, and the material is heated and fused in a glass ampoule. Then, the fused material is taken out from the glass ampoule and put into a pulverizer to pulverize the material, and the obtained powder is heated and sintered to thereby obtain a discotic sputtering target.

According to the present invention, it is possible to provide an optical recording medium which is excellent in recording sensitivity and enabling repeated recording with the same memory capacity as DVD-ROM even at a high linear velocity of 6X DVD (around 20 m/s) or more as well as is excellent in storage reliability.

According to the present invention, it is also possible to provide an optical recording medium which is excellent in repeated recording properties with the same memory capacity as DVD-ROM in a wide range of recording linear velocities and to provide a sputtering target for producing the optical recording medium.

### (Method for producing Optical Recording Medium)

The method for producing the optical recording medium of the present invention includes at least a recording layer forming step, may include an initial crystallization step, and further include other steps in accordance with the necessity.

### - Formation of Recording Layer -

The recording layer forming step is a step in which a recording layer is formed by a sputtering method using the sputtering target of the present invention.

The sputtering method is not particularly limited and may be suitably selected from among those known in the art in accordance with the intended use. For example, it is preferred that an Ar gas be used as a layer-formation gas, the application voltage be set at 1kW to 5kW, and the feed rate of the layer formation gas be set at 10 sccm to 40 sccm. The Ar gas pressure within a chamber in the course of sputtering is preferably 7.0 × 10⁻³mTorr (mbar) or less.

### - Initial Crystallization Step -

The initial crystallization step is a step in which an optical recording medium is rotated at a given constant linear velocity, and the optical recording medium is initially crystallized with a given power density.

For a disc having a structure described above, a vapor deposition method is commonly used for layer formation, and a resin substrate is also used for the substrate, and therefore the layers are formed at low-temperature. Thus, the recording layer immediately after formation is typically in an amorphous condition and in a state of low-reflectance, because the recording layer is in a quenched condition from a high-energy vapor phase. It is therefore preferable to form amorphous marks on a recording layer in a crystallized condition, because it is enabled to keep the reflectance of the optical recording medium higher. Then, initialization of the disc is needed to crystallize information-recorded areas. The initialization can be carried out by applying a high-power laser having a large-diameter to a recording layer and areas in the vicinity of the recording layer, scanning the laser, and fusing and slowly cooling the recording layer. For the high-power laser and the optical system used in the crystallization, arbitrarily selected ones can be used, however, those having a wavelength of around 800 nm are typically used. The output power of the laser is preferably 500mW to 3,000 mW, and more preferably 1,000 mW to 2,500mW. The size of the beam is preferably 0.5 µm to 2.0 µm in the scanning direction, and 30 µm to 200µm in the direction perpendicular to the scanning direction. By using such a rectangular or an ellipsoidal beam spot, the scannable range at the same time can be widened. As for the scanning speed and the irradiation power, it is necessary to set the optimum conditions based on the thermal properties and optical properties of the optical recording medium.

### (Method for Using Optical Recording Medium)

The method for using the optical recording medium of the present invention is that a laser beam is applied onto an optical recording medium of the present invention from the first protective layer side to thereby perform at least one of a recording operation, a reproducing operation, an erasing operation, and a rewriting operation of information.

In this case, the recording linear velocity of the optical recording medium is preferably 6X DVD (around 20 m/s) or more.

Specifically, a light beam for recording such as semiconductor laser is applied onto the optical recording medium from the substrate side through an object lens while rotating the optical recording medium at a given linear velocity. By the application of a light beam, the recording layer absorbs the light beam to increase the temperature of the optical recording medium locally, for example, by forming marks each having different optical properties, information can be recorded. The information recorded as above can be reproduced by applying a laser beam onto the optical recording medium from the substrate side while rotating the optical recording medium at a given linear velocity and detecting the reflected beam.

### (Optical Recording Apparatus)

The optical recording apparatus of the present invention is an optical recording apparatus for recording information on an optical recording medium by applying a laser beam from a laser source onto the optical recording medium, and the optical recording medium of the present invention is used for the optical recording medium.

The optical recording apparatus is not particularly limited, and may be suitably selected in accordance with the intended use. For example, the optical recording apparatus is provided with a laser light source which is a light source configured to output a laser beam such as a semiconductor laser; a condenser lens configured to condense the output laser beam from the laser light source onto an optical recording medium mounted on a spindle; an optical device configured to lead the output laser beam from the laser light source to the condenser lens and a laser beam detector; and the laser beam detector configured to detect reflected beams of the laser beam, and is further provided with other units in accordance with the necessity.

The optical recording apparatus is configured to lead a laser beam output from the laser light source to the condenser lens by means of the optical device, and the laser beam is condensed and applied onto the optical recording medium by means of the condenser lens to thereby record information on an optical recording medium. At this point in time, the optical recording apparatus is configured to lead reflected beams of the laser beam to the laser beam detector and then to control the quantity of light of the laser light source based on the detected amount of laser beam of the laser beam detector.

The laser beam detector is configured to convert the detected amount of the laser beam into voltage or current then to output it as a signal of the detected amount.

Examples of other units described above include controlling units.

The controlling units are not particularly limited and may be suitably selected in accordance with the intended use, provided that movements of the respective units can be controlled. Examples thereof include devices for applying and scanning an intensity-modulated laser beam such as sequencers and computers.

According to the present invention, it is possible to provide an optical recording medium which is capable of overwrite-recording with the same memory capacity as DVD-ROM even at a recording linear velocity of 6X DVD (around 20 m/s) or more and has excellent storage properties, because a GaSbSn alloy having a high crystallization rate, and Zn which is considered to prevent the degradation of an optical recording medium with time are added as the recording layer material.

According to the present invention, it is also possible to provide an optical recording medium which is excellent in overwrite-recording properties at high speeds.

Hereinafter, the present invention will be described in detail referring to specific examples, however, the present invention is not limited to the disclosed examples.

### Example 1

### - Production of Optical Recording Medium -

On a substrate for DVD+RW with a consecutive groove transcribed thereon, a first protective layer, a recording layer, a second protective layer, a third protective layer, and a reflective layer were formed in this order in a laminar structure.

For the substrate, a substrate having a diameter of 120mm and a thickness of 0.6 mm, generally used for DVD+RW, was used. On the surface of the substrate, a spiral consecutive groove was transcribed, and the track pitch was 0.74 µm, the groove depth was 30 nm, and the groove width was 300 nm.

First, for the material of the first protective layer, a mixture of ZnS and SiO₂ was used. The mixture ratio was set at 80:20 as molar ratio. The first protective layer was formed by a RF magnetron sputtering method, using an Ar atmosphere. The sputtering power was set at 4.0kW, and the feed rate of argon (Ar) gas to be introduced to a chamber was set at 10 sccm. The thickness of the first protective layer was measured using Elipsometer (manufactured by J.A. Woolam), and the thickness was 60 nm.

Next, for the material of the recording layer, a GaSbSnZn alloy having a composition expressed by the following Formula 1 was used.

(Ga_{α}Sb_{1-α}) _{1-β-γ}Sn_{β}Zn_{γ} Formula 1

In Formula 1, α, β, γ respectively represent an atomic ratio of their respective elements and are specifically represented as α = 0.14, β = 0.15, γ = 0.05, and β/γ = 3.

The recording layer was formed by a DC magnetron sputtering method, using an Ar atmosphere. The sputtering power was set at 0.7kW, and the feed rate of Ar gas was set at 30sccm. The thickness of the recording layer was measured using Elipsometer, and the thickness was 16 nm.

As for the target of the recording layer, a given amount of the material for the sputtering target was preliminarily weighed, and the material was heated and fused in a glass ampoule. Then, the fused material was taken out from the glass ampoule and put into a pulverizer to pulverize the material, and the obtained powder was heated and sintered to thereby form a discotic sputtering target. The composition ratio of the formed recording layer was measured based on the inductively-coupled plasma (ICP) emission spectrometry, and the composition ratio was same as that of the amount of target material. A sequential type ICP optical emission spectrometer (SPS4000, manufactured by Seiko Instruments Inc.) was used in the ICP optical emission spectrometry. In Examples and Comparative Examples to be hereinafter described, the alloy composition of the recording layer is also same as the alloy composition of the sputtering target.

Next, a second protective layer was formed on the recording layer using the same material and the same method as used for the first protective layer. However, the sputtering power was set at 1.0 kW.

The thickness of the second protective layer was measured using Elipsometer, and the thickness was 7 nm.

Next, a SiC layer was formed as a third protective layer for the purpose of corrosion protection, because sulfide was used for the second protective layer. The third protective layer was formed under Ar gas atmosphere by a DC magnetron sputtering method, in the same manner as used for the recording layer. The sputtering power was set at 1.0 kW, and the feed rate of Ar gas was set at 20 sccm.

The thickness of the third protective layer was measured using Elipsometer, and the thickness was 5 nm.

Next, a reflective layer was formed on the SiC layer. For the material of the reflective layer, 99.99% Ag was used. The reflective layer was formed by a DC magnetron sputtering method. The sputtering power was set at 3.5 kW, and the feed rate of Ar gas was set as 20 sccm.

The thickness of the Ag layer was measured using an X-ray fluorescence thickness meter, and the thickness was 150nm.

Next, a UV curable resin for optical disc was applied over the surface of the reflective layer by a spin-coating method and sufficiently cured by irradiating the reflective layer with a UV lamp. Further, a polycarbonate resin substrate was boned to the surface of the resin protective layer using a DVD applicator to thereby produce an optical disc having a layer structure as shown in FIG. 4.

### < Initialization >

The obtained optical recording medium was initialized by use of an initialization device for phase-change disc. For the optical beam of the initialization device, one having an optical beam width of 80 µm in the direction perpendicular to the scanning direction was used. The output power (power consumption) of the laser was set at 1,500 mW, and the entire surface of the optical recording medium was scanned at a scanning speed of 12 m/s.

This sample disc satisfied primary properties of DVD+RW, with an unrecorded condition.

### < Evaluation of Performance >

The obtained optical recording medium was evaluated with respect to recording properties. In the evaluation of recording properties, a DVD+RW evaluation system, DDU1000, manufactured by PULSTEC INDUSTRIAL CO., LTD. equipped with an optical pickup having an object lens NA of 0.65 and a wavelength of 660 mW, was used.

A repetition pattern of 8T mark - 8T space was recorded 10 times, and then the CN ratio was measured.

The recording conditions are as follows:
· Scanning speed: 27.9 m/s (8X DVD+RW standard scanning speed)
· Channel bit rate: 209.3 MHz (8X DVD+RW standard degree)
· Recording power: 28 mW
· Erasing power: 7 mW

The strategy used for recording is "2T Write Strategy" described in "Recordable Compact Disc systems, PART III: CD-RW, Volume 3: version 1.1", which is written standards of CD-RW. The parameter was set as Tmp = 3.6 ns, and TC = 0ns.

After the recording, the scanning speed of the optical recording medium was set at 3.49 m/s to measure the CN ratio, and the CN ratio was an excellent value of 58.0 dB.

Accordingly, it is verified that the optical recording medium of Example 1 enables direct overwriting at a scanning speed as fast as 8X DVD+RW and ensuring an adequate CN ratio.

### Comparative Example 1

### - Production of Optical Recording Medium -

An optical recording medium of Comparative Example 1 was produced in the same manner as in Example 1 except that the composition of the recording layer was changed so as to be represented by the following Formula 1.

(Ga_{α}Sb_{1-α}) _{1-β-γ}Sn_{β}Zn_{γ} Formula 1

In Formula 1, α, β, γ respectively represent an atomic ratio of their respective elements and are specifically represented as α = 0.10, β = 0.08, γ = 0.05, and β/γ = 1.6.

The CN ratio of the obtained optical recording medium was measured in the same manner as in Example 1, and the result was that a number of times of minute noise occurred over reproduced signals, and thus the CN ratio was a low value of 49 dB. This is attributed to the fact that Sb segregation occurred due to the low level value of α, and this caused RF signal noise.

### Example 2

### - Production of Optical Recording Medium -

An optical recording medium of Example 2 was produced in the same manner as in Example 1 except that the composition of the recording layer was changed so as to be represented by the following Formula 1.

(Ga_{α}Sb_{1-α}) _{1-β-γ}Sn_{β}Zn_{γ} Formula 1

In Formula 1, α, β, γ respectively represent an atomic ratio of their respective elements and are specifically represented as α = 0.14, β = 0.22, γ = 0.07, and β/γ = 3.14.

The pattern was recorded on the obtained optical recording medium, and the CN ratio was measured in the same manner as in Example 1, however the recording conditions were set as follows:
· Scanning speed: 34.9 m/s (10X DVD+RW standard scanning speed)
· Channel bit rate: 261.6 MHz (10X DVD+RW standard degree)
· Recording power: 32 mW
· Erasing power: 7 mW
· Tmp = 3.4 ns
· Number of repeatedly recording times: 10 times

After the recording, the scanning speed of the optical recording medium was set at 3.49 m/s to measure the CN ratio, and the CN ratio was an excellent value of 57.2 dB.

Accordingly, it is verified that the optical recording medium of Example 2 enables direct overwriting at a scanning speed as fast as 10X DVD+RW.

### Example 3

### - Production of Optical Recording Medium -

An optical recording medium of Example 3 was produced in the same manner as in Example 1 except that the composition of the recording layer was changed so as to be represented by the following Formula 1.

(Ga_{α}Sb_{1-α})_{1-β-γ}Sn_{β}Zn_{γ} Formula 1

In Formula 1, α, β, γ respectively represent an atomic ratio of their respective elements and are specifically represented as α = 0.14, β = 0.20, γ = 0.05, and β/γ = 4.0.

The obtained optical recording medium was evaluated using the same evaluation system as in Example 1. The recording conditions were set as follows:
· Scanning speed: 27.9 m/s
· Channel bit rate: 209.3 MHz
· Recording power: 32 mW
· Erasing power: 7.2 mW
· Number of recording times: 10 times

For signals to be recorded, EFM+ (one of 8-16 modulations) being the modulation mode of DVD was used. EFM+ is a modulation mode in which marks and spaces each having a length of nT (however, n is a natural number of 3 to 14) are arrayed with respect to a channel clock cycle T according to the prescribed rules.

For the recording strategy, the aforementioned 2T Write Strategy was used. However, the parameters were set as follows:
· Tmp = 3.0 ns
· T3 = 3.0 ns
· TC3 = 3.2 ns
· dT3 = 0.3 ns
· Δ1 = 1.2 ns
· TC = 0.0 ns
· Δ2 = 1.2 ns

After the recording, the scanning speed of the optical recording medium was set at 3.49 m/s to measure Data to Clock Jitter, and the measurement result was 8.4%. This value satisfies 9% or less of the standards of DVD+RW.

Accordingly, it is verified that the optical recording medium of Example 3 enables direct overwriting at a scanning speed as fast as 8X DVD+RW.

Further, the optical recording medium was left in a thermostatic bath kept at 60°C for 300 hours, and then the pattern was recorded on the optical recording medium under the same conditions to measure the Data to Clock Jitter. The measurement result was 8.8%, and it was verified that the optical recording medium had so little degradation.

### Comparative Example 2

### - Production of Optical Recording Medium -

An optical recording medium of Comparative Example 2 was produced in the same manner as in Example 1 except that the composition of the recording layer was changed so as to be represented by the following Formula 1.

(Ga_{α}Sb_{1-α}) _{1-β-γ}Sn_{β}Zn_{γ} Formula 1

In Formula 1, α, β, γ respectively represent an atomic ratio of their respective elements and are specifically represented as α = 0.14, β = 0.15, γ = 0.01, and β/γ = 15.0.

The pattern was recorded on the obtained optical recording medium, and the optical recording medium was evaluated, in the same manner as in Example 3, and the Data to Clock Jitter value was 8.2% and showed an excellent result. The optical recording medium was left in a thermostatic bath kept at 60°C for 300 hours then to measure the Data to Clock Jitter of the optical recording medium under the same conditions as mentioned above. The measurement result was more than 12%. This is attributable to the fact that the properties of the disc were changed with time due to the low level value of γ.

### Example 4

### - Production of Optical Recording Medium -

Four optical recording media were produced in the same manner as in Example 3 except that the individual thicknesses of their recording layers were changed to 9 nm, 14 nm, 18 nm, and 22 nm, respectively.

The obtained optical recording media were measured with respect to Data to Clock Jitter in the same manner as in Example 3. Table 1 shows the measurement results.

**Table 1**

| Thickness of Recording Layer | Jitter (%) |
|---|---|
| 9 nm | 9.4 |
| 14 nm | 8.7 |
| 18 nm | 8.8 |
| 22 nm | 10.4 |

The results of Table 1 shows that any of the four optical recording media enabled overwriting, however, the optical recording medium having a recording layer of 9 nm in thickness and the optical recording medium having a recording layer 22 nm in thickness did not have sufficient recording properties. Thus, it is recognized that the optimum thickness of the recording layer is 10 nm to 20 nm.

### Example 5

### - Production of Optical Recording Medium -

An optical recording medium of Example 5 was produced in the same manner as in Example 1 except that the composition of the recording layer was changed so as to be represented by the following Formula 1.

(Ga_{α}Sb_{1-α}) _{1-β-γ}Sn_{β}Zn_{γ} Formula 1

In Formula 1, α, β, γ respectively represent an atomic ratio of their respective elements and are specifically represented as α = 0.18, β = 0.23, γ = 0.03, and β/γ = 7.67.

The obtained optical recording medium was measured with respect to the C/N ratio, and the result showed an excellent value of 54 dB.

Accordingly, it is verified that the optical recording medium enables direct overwriting at a scanning speed as fast as 8X DVD+RW, however, the C/N ratio of the optical recording medium of Example 5 was lower than that of the optical recording medium of Example 1.

### Comparative Example 3

### - Production of Optical Recording Medium -

An optical recording medium of Comparative Example 3 was produced in the same manner as in Example 1 except that the composition of the recording layer was changed so as to be represented by the following Formula 1.

(Ga_{α}Sb_{1-α}) _{1-β-γ}Sn_{β}Zn_{γ} Formula 1

In Formula 1, α, β, γ respectively represent an atomic ratio of their respective elements and are specifically represented as α = 0.22, β = 0.27, γ = 0.05, and β/γ = 5.4.

The obtained optical recording medium was examined to observe RF signals in an unrecorded condition using the evaluation system used in Example 1, however, it was impossible to evaluate the optical recording medium, because fluctuation in reflectance was extremely large. It was unable to initialize the optical recording medium (crystallize the recording layer material). This is likely to be caused by the excessive amounts of Ga component and Sn component.

### Comparative Example 4

### - Production of Optical Recording Medium -

An optical recording medium of Comparative Example 4 was produced in the same manner as in Example 1 except that the composition of the recording layer was changed so as to be represented by the following Formula 1.

(Ga_{α}Sb_{1-α}) _{1-β-γ}Sn_{β}Zn_{γ} Formula 1

In Formula 1, α, β, γ respectively represent an atomic ratio of their respective elements and are specifically represented as α = 0.14, β = 0.15, γ = 0.13, and β/γ = 1.15.

The obtained optical recording medium was measured with respect to the C/N ratio at a scanning speed of 8X DVD+RW in the same manner as in Example 1, and the measurement result was 48 dB. This is attributable to the fact that the crystallization rate was lowered due to the excessive amount of Zn.

### Industrial Applicability

The optical recording medium of the present invention enables highly-reliable recording with the same memory capacity as DVD-ROM even at a linear velocity of 6X DVD or more (around 20 m/s or more) and can be widely used for various optical recording media, particularly for RW discs (called as ReWritable disc) such as CD-RW (Compact Disc ReWritable), DVD-RW (Digital Versatile Disc ReWritable), DVD+RW, DVD-RAM, and BD (Blu-ray Disc).

## Claims

1. An optical recording medium comprising:
a substrate,
a first protective layer,
a recording layer,
a second protective layer, and
a reflective layer,
the first protective layer, recording layer, second protective layer and reflective layer being disposed on the substrate in this order or in reverse order,
wherein the recording layer comprises a composition expressed by the following Formula 1:
(Ga_{α}Sb_{1-α}) _{1-β-γ}Sn_{β}Zn_{γ} Formula 1
where α, β, and γ respectively represent an atomic ratio of their respective elements and are expressed as 0.12 ≤ α ≤ 0.20, 0.10 ≤ β ≤ 0.25, and 0.02 ≤ γ ≤ 0.10.

2. The optical recording medium according to claim 1, wherein the recording layer comprises a composition expressed by the following Formula 1-1:
(Ga_{α}Sb_{1-α}) _{1-β-γ}Sn_{β}Zn_{γ} Formula 1-1
where α, β, and γ respectively represent an atomic ratio of their respective elements and are expressed as 0.13 ≤ α ≤ 0.17, 0.12 ≤ β ≤ 0.23, and 0.03 ≤ γ ≤ 0.07.

3. The optical recording medium according to any one of claims 1 to 2, wherein β and γ satisfy the following formula:
0.13 ≤ β/γ ≤ 5.0.

4. The optical recording medium according to claim 3, wherein β and γ satisfy the following formula:
2.0 ≤ β/γ ≤ 5.0.

5. The optical recording medium according to any one of claims 1 to 4, wherein the recording layer performs at least one of a recording operation, a reproducing operation, an erasing operation and a rewriting operation of information by utilizing reversible phase-changes between amorphous and crystalline phases.

6. The optical recording medium according to any one of claims 1 to 5, wherein the recording layer has a thickness of 10nm to 20nm.

7. The optical recording medium according to any one of claims 1 to 6, wherein the first protective layer and the second protective layer respectively comprise a mixture of ZnS and SiO₂.

8. The optical recording medium according to any one of claims 1 to 7, wherein the reflective layer comprises any one of Ag and an Ag alloy.

9. The optical recording medium according to any one of claims 1 to 8, further comprising a sulfur-free third protective layer between the second protective layer and the reflective layer,
wherein the sulfur-free third protective layer comprises any one of SiC and Si.

10. The optical recording medium according to any one of claims 1 to 9, further comprising an interface layer at least between the recording layer and the first protective layer or between the recording layer and the second protective layer.

11. The optical recording medium according to any one of claims 1 to 10 enabling repeated recording at a linear velocity of 20 m/s or more.

12. A sputtering target used for the production of a recording layer, the sputtering target comprising:
a composition expressed by the following Formula 1:
(Ga_{α}Sb_{1-α}) _{1-β-γ}Sn_{β}Zn_{γ} Formula 1
where α, β, and γ respectively represent an atomic ratio of their respective elements and are expressed as 0.12 ≤ α ≤ 0.20, 0.10 ≤ β ≤ 0.25, and 0.02 ≤ γ ≤ 0.10.

13. The sputtering target according to claim 12, comprising a composition expressed by the following Formula 1-1:
(Ga_{α}Sb_{1-α})_{1-β-γ}Sn_{β}Zn_{γ} Formula 1-1
where α, β, and γ respectively represent an atomic ratio of their respective elements and are expressed as 0.13 ≤ α ≤ 0.17, 0.12 ≤ β ≤ 0.23, and 0.03 ≤ γ ≤ 0.07.

14. The sputtering target according to any one of claims 12 to 13, wherein β and γ satisfy the formula of 0.13 ≤ β/γ ≤ 5.0.

15. The sputtering target according to claim 14, wherein β and γ satisfy the formula of 2.0 ≤ β/γ ≤ 5.0.

16. A method for producing an optical recording medium comprising:
forming a recording layer by a sputtering method using a sputtering target according to any one of claims 12 to 15 to thereby produce an optical recording medium which comprises a substrate, a first protective layer, the recording layer, and a reflective layer,
the first protective layer, recording layer, second protective layer and reflective layer being disposed on the substrate in this order or in reverse order.

17. A method for using an optical recording medium comprising:
applying a laser beam onto an optical recording medium from the first protective layer side to thereby perform at least one of a recording operation, a reproducing operation, an erasing operation, and a rewriting operation of information,
wherein the optical recording medium is an optical recording medium according to any one of claims 1 to 11.

18. An optical recording apparatus for applying a laser beam onto an optical recording medium from a laser source to thereby perform at least one of a recording operation, a reproducing operation, an erasing operation, and a rewriting operation on the optical recording medium,
wherein the optical recording medium is an optical recording medium according to any one of claims 1 to 11.
